# EUROPÄISCHE PATENTSCHRIFT

(11) **EP 2 271 847 B1**
(45) Veröffentlichungstag und Bekanntmachung des Hinweises auf die Patenterteilung: **08.05.2019**
(21) Anmeldenummer: 09728729.6
(22) Anmeldetag: 27.03.2009
(51) Int. Cl.: F15B 15/14, F16J 15/32

(54) **VORRICHTUNG ZUM ABDICHTEN EINES HYDRAULIKKOLBENS**
DEVICE FOR SEALING A HYDRAULIC PISTON
DISPOSITIF DESTINÉ À RÉALISER L'ÉTANCHÉITÉ D'UN PISTON HYDRAULIQUE

(30) Priorität: 03.04.2008 DE 102008017035
(43) Veröffentlichungstag der Anmeldung: 12.01.2011
(73) Patentinhaber: Gustav Magenwirth GmbH & Co. KG, 72574 Bad Urach (DE)
(72) Erfinder: BUCK, Markus, 72584 Hülben (DE)
(74) Vertreter: Friese Goeden Patentanwälte PartGmbB
(86) Internationale Anmeldenummer: PCT/EP2009/002243
(87) Internationale Veröffentlichungsnummer: WO 2009/121523

(56) Entgegenhaltungen:
- DE-A1- 2 263 012
- US-A- 2 293 564
- US-A- 2 686 402
- US-A- 5 833 245
- US-A- 5 960 700

## Beschreibung

Die Erfindung bezieht sich auf eine Vorrichtung zur Abdichtung eines Hydraulikkolbens in einem Hydraulikzylinder, mit wenigstens einer im Hydraulikkolben angeordneten Dichtungsnut und einer in die Dichtungsnut eingesetzten Lippendichtung mit einer einer Fluidseite zugewandten Dichtlippe und einem einer Luftseite zugewandten Dichtrücken.

Solche Vorrichtungen sind bekannt und werden beispielsweise bei hydraulischen Brems- und Kupplungssystemen eingesetzt. An einem Hydraulikkolben eines hydraulischen Bremssystems sind zumeist zwei Dichtungsvorrichtungen angeordnet. Eine primäre Dichtung an der Druckseite des Kolbens und eine sekundäre Dichtung, die das Hydrauliksystem gegenüber der Luft abdichtet.

Durch die Reibung der Lippendichtung an der Zylinderwand wirkt bei der Bewegung des Kolbens, insbesondere beim Wechsel zwischen der Vorwärts- und Rückwärtsbewegung, ein Kippmoment auf die Lippendichtung. Dabei kann die Dichtung bereichsweise vom Dichtungsnut-Grund abheben, wodurch am Innendurchmesser der Dichtung ein Kanal entsteht und Luft in den Zylinderraum gelangen kann. Bei einer Sekundärdichtung für eine hydraulische Bremse gelangt die Luft in das hydraulische Bremssystem, wodurch der Druckpunkt der Bremse wandern kann und dadurch die Dosierbarkeit verschlechtert wird. Die Luft kann aber auch zu einem Ausfall des Bremssystems führen.

Um die Gefahr des Abhebens der Dichtung vom Nutgrund zu verringern ist beispielsweise aus der DE 22 63 012 A und US2293564 bekannt, die Dichtungsnut in zwei axial unterschiedlich lange Abschnitte zu teilen, die direkt ineinander übergehen. Der längere Abschnitt weist eine zylindrische Form auf. Im kürzeren Abschnitt wird der Grundkreisdurchmesser ausgehend von dem zylindrischen Abschnitt größer. In die Dichtungsnut ist eine Lippendichtung eingesetzt, deren inneres freies Ende am Nutgrund des kürzeren Abschnitts anliegt und dadurch stärker komprimiert wird. Durch die starke Kompression des freien Endes besteht jedoch eine erhöhte Reibung zwischen der Dichtung und der Hydraulikzylinder-Innenwand, wodurch die Bedienung, insbesondere die Dosierbarkeit beispielsweise einer hydraulischen Bremse, verschlechtert werden kann.

Aufgabe der Erfindung ist es daher eine Vorrichtung zur sicheren Abdichtung eines Hydraulikkolbens der vorgenannten Art zu schaffen, bei der die Kipp-Gefahr der Dichtung verringert und dabei die Reibung zwischen der Dichtung und einem Hydraulikzylinder nicht wesentlich verändert wird.

Diese Aufgabe wird dadurch gelöst, dass Mittel zur Verbesserung der Dichtwirkung der Lippendichtung zumindest durch Formung der Dichtungsnut an wenigstens einer Dichtungsnut-Seitenwand und/oder dem Dichtungsnut-Grund vorgesehen sind.

Die erfindungsgemäßen Mittel zur Verbesserung der Dichtwirkung werden hauptsächlich auf der Geberseite eines hydraulischen Systems eingesetzt, beispielsweise in einer Handarmatur oder in einem Fußgeber eines hydraulischen Brems- oder Kupplungssystems. Die Erfindung ist jedoch auch auf der Nehmerseite eines hydraulischen Systems einsetzbar, beispielsweise an einer hydraulisch betätigten Kupplung oder an einem Hauptbremszylinder eines Bremssystems.

Durch die erhöhte Dichtwirkung können der Hydraulikzylinder und der Hydraulikkolben entsprechend kleiner und kompakter ausgebildet sein. Der Hydraulikzylinder kann dadurch beispielsweise an einer Handarmatur in radialer sowie in axialer Bauweise angeordnet sein.

Eine Ausführungsform zur Verbesserung der Dichtwirkung sieht vor, den Durchmesser der Dichtungsnut größer als den Nenndurchmesser der Lippendichtung zu wählen. Dadurch wird die Dichtung stärker gedehnt und weist eine größere Vorspannung auf. Die Kipp-Gefahr wird dabei umso geringer, je größer die Durchmesser-Differenz und damit die Dehnung der Dichtung ist. Der Durchmesser der Dichtungsnut ist dabei beispielsweise in einem Bereich zwischen 0,1% und 10% größer als der Nenndurchmesser der Dichtung. Vorzugsweise beträgt die Durchmesser-Differenz bei einem handelsüblichen Hydraulikkolben im Motorradbereich etwa 2% - 3% des Nenndurchmessers.

Eine weitere Ausführungsform der Erfindung sieht vor, die Lippendichtung in der Dichtungsnut axial einzuspannen, beispielsweise durch entsprechende Dimensionierung der Nutbreite oder durch einen Einlegering, der nach dem Einsetzen der Dichtung in die Dichtungsnut beispielsweise am Dichtrücken eingeschoben werden kann. Dadurch verringert sich das axiale Spiel der Dichtung wodurch kein Raum zum Verkippen bleibt.

Nach der Erfindung ist die Lippendichtung an eine Dichtungsnut-Seitenwand, vorzugsweise an der Luftseite, geklebt. Die Klebeverbindung verhindert, dass die Dichtung kippt und Luft in das Hydrauliksystem eindringen kann. Bevorzugt kann als Klebstoff ein dauerelastischer, Öl- oder Bremsflüssigkeit-resistenter Klebstoff verwendet werden.

Eine bevorzugte Ausgestaltung der Erfindung sieht vor, dass der Dichtungsnut-Grund schräg ausgebildet ist und vorzugsweise fluidseitig eine geringere Tiefe aufweist als luftseitig. Dadurch ergibt sich an einer Seite der Dichtung eine höhere Spannung und damit eine bessere Abdichtung. Zusätzlich liegt die andere Seite der Dichtung an einer Dichtungsnut-Seitenwand an, so dass die Dichtung nicht mehr kippen kann. Der Winkel zwischen dem Dichtungsnut-Grund und der Längsachse des Hydraulikkolbens beträgt dabei vorzugsweise zwischen 0,1° und 6°, insbesondere etwa 2°.

Weitere vorteilhafte Ausgestaltungen der Erfindung ergeben sich aus den Unteransprüchen, wobei die beschriebenen Maßnahmen zur Verbesserung der Dichtwirkung sowohl einzeln als auch in beliebiger Kombination verwendet werden können.

Nachfolgend sind verschiedene Ausführungsbeispiele der Erfindung anhand der Zeichnungen näher erläutert.

Es zeigen:
- Fig. 1: eine erste Ausführung der Erfindung mit vergrößertem Nenndurchmesser der Dichtungsnut,
- Fig. 2: eine zweite Ausgestaltung der Erfindung mit einer axialen Einlegescheibe,
- Fig. 3: eine dritte Ausgestaltung der Erfindung mit verklebtem Dichtrücken,
- Fig. 4: eine vierte Ausgestaltung der Erfindung mit schräger Dichtungsnut-Seitenwand,
- Fig. 5: eine fünfte Ausgestaltung der Erfindung mit schrägem Dichtungsnut-Grund,
- Fig. 6: eine Schnittansicht einer Bremsarmatur mit einem Hydraulikkolben gemäß der Fig. 5 und
- Fig. 7: einen Längsschnitt des Hydraulikkolbens der Fig. 6.

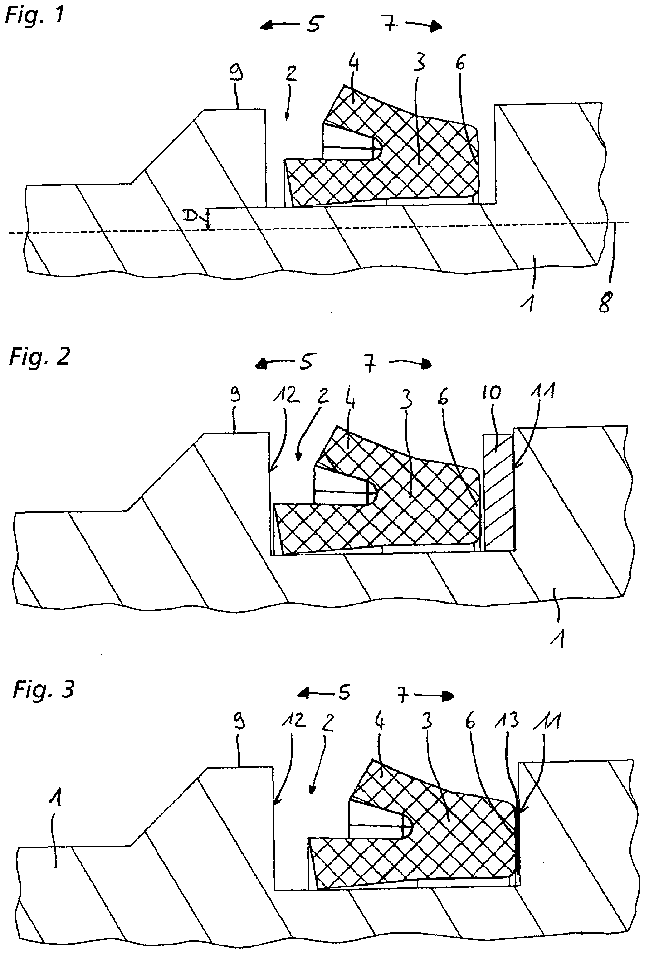

Figur 1 zeigt einen Ausschnitt eines hydraulischen Bremskolbens 1 im Bereich einer sekundären Dichtungs-Vorrichtung mit einer Dichtungsnut 2 und einer darin eingesetzten Lippendichtung 3, mit einer Dichtlippe 4 und einem Dichtrücken 6. Die Dichtlippe 4 zeigt dabei in Richtung der Fluid- oder Ölseite 5 des Kolbens 1 und der Dichtrücken 6 ist der Luftseite 7 des Kolbens zugewandt.

Die Dichtungsnut 2 weist gegenüber dem strichliniert angedeuteten Nenndurchmesser 8 der Lippendichtung 3 einen vergrößerten Außendurchmesser auf. Im Beispiel beträgt die Differenz D etwa 0,15 mm bei einem Nenndurchmesser des Kolbens von etwa 5,5 mm, was etwa 2,5% dieses Nenndurchmessers entspricht. Dadurch erhöht sich der Überstand der Dichtlippe 4 gegenüber der Nut-Oberkante 9 und damit die Kompression der Lippendichtung 3 im eingebauten Zustand. Wobei je nach gewünschter zusätzlicher Kompression jede andere Durchmesserdifferenz D denkbar ist, beispielsweise im Bereich zwischen 0,1% und 10% des Nenndurchmessers oder darüber hinaus.

Bei der in Fig. 2 gezeigten Ausführung der Erfindung ist an der Luftseite 7 zwischen Dichtrücken 6 der Lippendichtung 3 und der Dichtungsnut-Seitenwand 11 eine Ringscheibe 10 eingesetzt, die das axiale Spiel der Lippendichtung 3 verringert. An beiden Seiten der Lippendichtung 3 bleibt dadurch nur ein geringer Spalt zwischen Dichtung 3 und der jeweiligen Dichtungsnut-Seitenwand 11, 12, so dass ein Kippen der Dichtung 3 nicht mehr möglich ist. Die Ringscheibe 10 ist bevorzugt aus elastischem Material hergestellt, so dass sie nach dem Einsetzen der Dichtung in die Dichtungsnut 2 eingeschoben werden kann.

In Fig. 3 ist eine dritte Ausführung der Erfindung gezeigt, bei der der Dichtrücken 6 an die Luftseiten-Dichtungsnut-Seitenwand 11 geklebt ist. Der Klebstoff 13 ist dabei vorzugsweise dauerelastisch und Öl- oder Bremsflüssigkeitsresistent.

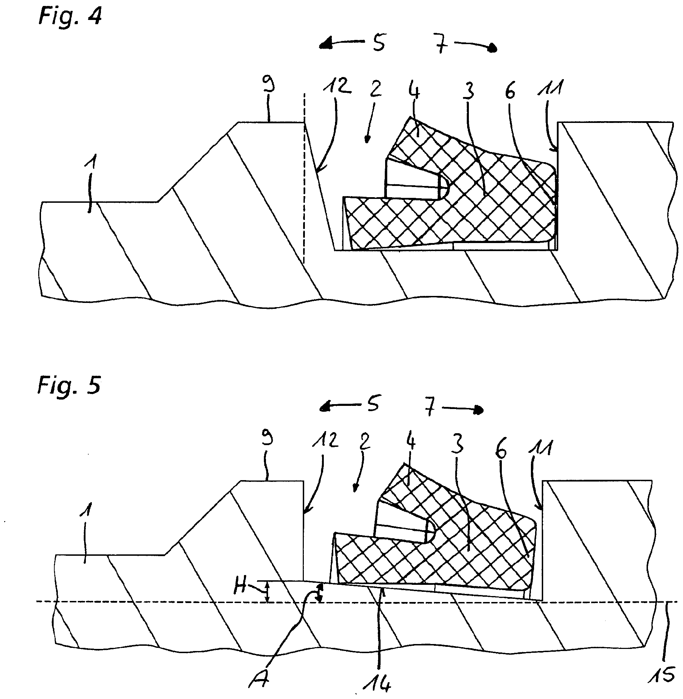

Bei der in Fig. 4 gezeigten Ausführungsvariante ist die auf der Fluidseite 5 liegende Dichtungsnut-Seitenwand 12 abgeschrägt, wobei die Nutbreite zum Nutgrund 14 hin abnimmt. Die Lippendichtung 3 liegt dadurch mit dem Dichtrücken 6 im wesentlichen an der Luftseiten-Dichtungsnut-Seitenwand 11 an, wodurch die Kippgefahr vermindert wird.

Die in Fig. 5 dargestellte Ausführungsvariante weist einen abgeschrägten Dichtungsnut-Grund 14 auf, der von der Fluidseiten-Dichtungsnut-Seitenwand 12 zur Luftseiten-Dichtungsnut-Seitenwand 11, das heißt über die gesamte Breite der Dichtungsnut 2, linear abfällt, so dass die Nuttiefe auf der Fluidseite 5 geringer ist als auf der Luftseite 7. Die Lippendichtung 3 liegt dabei schräg in der Dichtungsnut 2. Dadurch wird die Dichtung 3 im Bereich der Dichtlippe 4 stärker komprimiert und damit der Andruck der Dichtlippe 4 an eine umgebende Zylinderwand (nicht gezeigt) verbessert. Alternativ könnte der Dichtungsnut-Grund 14 auch eine oder mehrere Stufen aufweisen, auf deren Kanten die Lippendichtung schräg aufliegen könnte.

Es ist also hierbei nicht die gesamte Dichtung weiter radial nach außen positioniert, sondern nur der fluidseitige Dichtungsteil, der hauptsächlich zur Abdichtung beiträgt. Dadurch ist auch der Gesamtandruck der äußeren Dichtlippe 4 an den Zylinder vergleichsweise gering und entspricht weitgehend dem Andruck von Dichtungen in üblicher Ausführung und Anordnung.

Die Dichtung liegt durch die Schräge des Nutgrunds 14 schon in "verkanteter Lage", so dass ein weiteres Verkanten praktisch nicht mehr auftreten kann. Außerdem ist auch eine Längsverschiebung der Dichtung durch die vorhandene Reibung am schrägen Nutengrund praktisch ausgeschlossen. Bei Einwirkung eines Kippmomentes auf die äußere Dichtlippe 4 ist durch die bereits vorhandene Schrägstellung der Dichtung ein weiteres Kippen nicht mehr möglich, so dass auch die innere, luftseitige Dichtfläche nicht aufgehen kann.

Zusätzlich kann der Dichtrücken 6 luftseitig bereichsweise oder ganz an der Dichtungsnut-Seitenwand 11 anliegen, so dass die Kippgefahr der Dichtung 3 zusätzlich reduziert wird.

Der Winkel A zwischen Dichtungsnut-Grund 14 und der Längsachse 15 des Hydraulikzylinders beträgt dabei vorzugsweise zwischen 0,1° und 6°.

Der Höhenunterschied H entlang des Dichtungsnut-Grunds 14 beträgt in einer bevorzugten Ausführung 0,15 mm bei einer Länge der Dichtungsnut von etwa 4,5 mm. Der Winkel A beträgt dabei etwa 2°.

Die in Fig. 5 dargestellte Ausführungsform hat auch den Vorteil einer leichteren Montage und Herstellung.

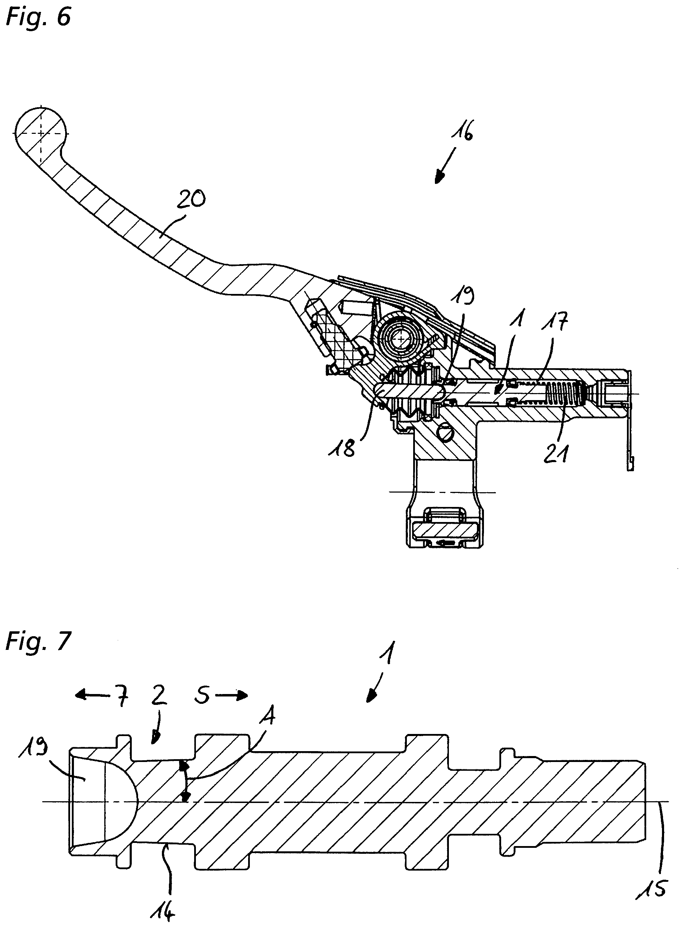

In Fig. 6 ist beispielhaft eine Handarmatur 16 einer hydraulischen Bremsanlage eines Motorrads gezeigt. Die Handarmatur 16 hat einen Hydraulikzylinder 17, in dem ein Bremskolben 1 beweglich gelagert ist. Der Bremskolben 1 ist über eine Druckstange 18, die in eine Kalotte 19 auf der Luftseite 5 am Bremskolben 1 eingreift, mit dem Handhebel 20 der Armatur 16 verbunden, so dass eine Druckbewegung des Handhebels 20 eine Bewegung des Bremskolbens 1 bewirkt. Die Rückstellung des Bremskolbens 1 und des Handhebels 20 erfolgt ausschließlich durch eine Rückstellfeder 21 auf der Ölseite 5 des Hydraulikzylinders 17. Die Handarmatur 16 kann jedoch auch eine beliebig andere Ausgestaltung haben, weshalb die Erfindung in keiner Weise auf dieses Beispiel beschränkt ist.

Der Bremskolben 1 weist Mittel Zur Verbesserung der Dichtwirkung gemäß der Fig. 5 auf. Wie in Fig. 7 näher gezeigt, hat die Dichtungsnut 2 einen gegenüber der Längsachse 15 des Kolbens 1 schräg verlaufenden Dichtungsnut-Grund 14, wobei die Nuttiefe auf der Ölseite 5 geringer ist als auf der Luftseite 7. Der Winkel A zwischen Nutgrund 14 und Längsachse 15 beträgt im Beispiel idealerweise etwa 2°.

## Patentansprüche

1. Vorrichtung zur Abdichtung eines Hydraulikkolbens (1) in einem Hydraulikzylinder, mit wenigstens einer im Hydraulikkolben (1) angeordneten Dichtungsnut (2) und einer in die Dichtungsnut (2) eingesetzten Lippendichtung (3) mit einer einer Fluidseite (5) zugewandten Dichtlippe (4) und einem einer Luftseite (7) zugewandten Dichtrücken (6), wobei Mittel zur Verbesserung der Dichtwirkung der Lippendichtung (3) zumindest durch Formung der Dichtungsnut (2) an wenigstens einer Dichtungsnut-Seitenwand (11, 12) und/oder dem Dichtungsnut-Grund (14) vorgesehen sind, **dadurch gekennzeichnet, dass** die Lippendichtung (3) an eine Dichtungsnut-Seitenwand(11) geklebt ist.

2. Vorrichtung nach Anspruch 1, **dadurch gekennzeichnet, dass** die Lippendichtung an der Luftseite (7) an die Dichtungsnut-Seitenwand (11) geklebt ist.

3. Vorrichtung nach einem der Ansprüche 1 bis 2, **dadurch gekennzeichnet, dass** die Lippendichtung an die Dichtungsnut-Seitenwand (11) mit einem dauerelastischen, Öl- oder Bremsflüssigkeit-resistenten Klebstoff geklebt ist.

4. Vorrichtung zur Abdichtung eines Hydraulikkolbens (1) in einem Hydraulikzylinder, mit wenigstens einer im Hydraulikkolben (1) angeordneten Dichtungsnut (2) und einer in die Dichtungsnut (2) eingesetzten Lippendichtung (3) mit einer einer Fluidseite (5) zugewandten Dichtlippe (4) und einem einer Luftseite (7) zugewandten Dichtrücken (6), **dadurch gekennzeichnet, dass** die Lippendichtung (3) in der Dichtungsnut (2) durch einen Einlegering (10) axial eingespannt ist.

5. Vorrichtung nach Anspruch 4, **dadurch gekennzeichnet, dass** der Einlegering (10) zwischen dem Dichtrücken (6) der Lippendichtung (3) und der Dichtungsnut-Seitenwand (11) angeordnet ist.

6. Vorrichtung nach einem der vorhergehenden Ansprüche,
**dadurch gekennzeichnet, dass** die Durchmesser-Differenz (D) zwischen dem Durchmesser der Dichtungsnut (2) und dem Nenndurchmesser (8) der Lippendichtung (3) etwa (0,1% bis 10%, vorzugsweise etwa 2% bis 3%, des Nennduchmessers beträgt.

7. Vorrichtung nach einem der vorhergehenden Ansprüche,
**dadurch gekennzeichnet, dass** eine Dichtungs-Seitenwand (12) schräg ausgebildet ist.

8. Vorrichtung nach einem der vorhergehenden Ansprüche,
**dadurch gekennzeichnet, dass** die Dichtungs-Seitenwand (12) an der Fluidseite (5) schräg ausgebildet ist.

9. Vorrichtung nach einem der Ansprüche 7 bis 8, **dadurch gekennzeichnet, dass** die Dichtungsnutbreite der schräg ausgebildeten Dichtungs-Seitenwand (12) zum Dichtungsnutgrund (14) abnimmt.

10. Vorrichtung nach einem der vorhergehenden Ansprüche,
**dadurch gekennzeichnet, dass** der Dichtungsnut-Grund (14) schräg ausgebildet ist.

11. Vorrichtung nach Anspruch 10, **dadurch gekennzeichnet, dass** der Dichtungsnut-Grund (14) fluidseitig eine geringere Tiefe aufweist als luftseitig.

12. Vorrichtung nach einem der Ansprüche 10 bis 11, **dadurch gekennzeichnet, dass** der Winkel (A) zwischen dem Dichtungsnut-Grund (14) und der Längsachse (15) des Hydraulikkolbens (1) zwischen 0,1° und 6° beträgt.

13. Vorrichtung nach einem der Ansprüche 10 bis 12, **dadurch gekennzeichnet, dass** Winkel (A) zwischen dem Dichtungsnut- Grund (14) und der Längsachse (15) des Hydraulikkolbens (1) etwa 2° beträgt.

## Claims

1. Apparatus for sealing a hydraulic piston (1) in a hydraulic cylinder, comprising at least one sealing groove (2) arranged in the hydraulic piston (1) and a lip seal (3), which is inserted into the sealing groove (2) and has a sealing lip (4) facing a fluid side (5) as well as a sealing back (6) facing an air side (7), wherein devices for improving the sealing effect of the lip seal (3) are provided at least by forming the sealing groove (2) on at least one sealing groove side wall (11, 12) and/or the sealing groove base (14), **characterized in that** the lip seal (3) is bonded to a sealing groove side wall (11).

2. Apparatus according to claim 1, **characterized in that** the lip seal is bonded on the air side (7) to the sealing groove side wall (11).

3. Apparatus according to any of claims 1 to 2, **characterized in that** the lip seal is bonded to the sealing groove side wall (11) by means of a permanently elastic oil or brake fluid-resistant adhesive.

4. Apparatus for sealing a hydraulic piston (1) in a hydraulic cylinder, comprising at least one sealing groove (2) arranged in the hydraulic piston (1) and a lip seal (3), which is inserted into the sealing groove (2) and has a sealing lip (4) facing a fluid side (5) as well as a sealing back (6) facing an air side (7), **characterized in that** the lip seal (3) is axially clamped in the sealing groove (2) by a spacer ring (10).

5. Apparatus according to claim 4, **characterized in that** the spacer ring (10) is arranged between the sealing back (6) of the lip seal (3) and the sealing groove side wall (11).

6. Apparatus according to any of the preceding claims, **characterized in that** the diameter difference (D) between the diameter of the sealing groove (2) and the nominal diameter (8) of the lip seal (3) is about 0.1 % to 10 %, preferably about 2 % to 3 %, of the nominal diameter.

7. Apparatus according to any of the preceding claims, **characterized in that** a seal side wall (12) is formed obliquely.

8. Apparatus according to any of the preceding claims, **characterized in that** the seal side wall (12) is formed obliquely on the fluid side (5).

9. Apparatus according to any of claims 7 to 8, **characterized in that** the seal groove width of the obliquely formed seal side wall (12) decreases towards the seal groove base (14).

10. Apparatus according to any of the preceding claims, **characterized in that** the seal groove base (14) is formed obliquely.

11. Apparatus according to claim 10, **characterized in that** the seal groove base (14) has a smaller depth on the fluid side than on the air side.

12. Apparatus according to any of claims 10 to 11, **characterized in that** the angle (A) between the seal groove base (14) and the longitudinal axis (15) of the hydraulic piston (1) is between 0.1° and 6°.

13. Apparatus according to any of claims 10 to 12, **characterized in that** the angle (A) between the seal groove base (14) and the longitudinal axis (15) of the hydraulic piston (1) is about 2°.

## Revendications

1. Dispositif pour étancher un piston hydraulique (1) dans un vérin hydraulique, comportant au moins une gorge d'étanchéification (2) disposée dans le piston hydraulique (1) et un joint d'étanchéité à lèvre (3) mis en place dans la gorge d'étanchéification (2) et pourvu d'une lèvre d'étanchéité (4) tournée vers un côté fluide (5) et d'un dos d'étanchéité (6) tourné vers un côté air (7), des moyens étant prévus pour améliorer l'effet d'étanchéification du joint à lèvre (3) au moins par mise en forme de la gorge d'étanchéification (2) sur au moins une paroi latérale (11, 12) de la gorge d'étanchéification et/ou au fond (14) de la gorge d'étanchéification,
**caractérisé en ce que**
le joint à lèvre (3) est collé sur une paroi latérale (11) de la gorge d'étanchéification.

2. Dispositif selon la revendication 1,
**caractérisé en ce que**
le joint à lèvre est collé sur la paroi latérale (11) de la gorge d'étanchéification du côté air (7).

3. Dispositif selon l'une des revendications 1 à 2,
**caractérisé en ce que**
le joint à lèvre est collé sur la paroi latérale (11) de la gorge d'étanchéification par une colle durablement élastique et résistante à l'huile ou au liquide de freinage.

4. Dispositif pour étancher un piston hydraulique (1) dans un vérin hydraulique, comportant au moins une gorge d'étanchéification (2) disposée dans le piston hydraulique (1) et un joint d'étanchéité à lèvre (3) mis en place dans la gorge d'étanchéification (2) et pourvu d'une lèvre d'étanchéité (4) tournée vers un côté fluide (5) et d'un dos d'étanchéité (6) tourné vers un côté air (7),
**caractérisé en ce que**
le joint à lèvre (3) est serré axialement par un anneau d'insertion (10) dans la gorge d'étanchéification (2).

5. Dispositif selon la revendication 4,
**caractérisé en ce que**
l'anneau d'insertion (10) est agencé entre le dos d'étanchéité (6) du joint à lèvre (3) et la paroi latérale (11) de la gorge d'étanchéification.

6. Dispositif selon l'une des revendications précédentes,
**caractérisé en ce que**
la différence en diamètre (D) entre le diamètre de la gorge d'étanchéification (2) et le diamètre nominal (8) du joint à lèvre (3) est d'environ 0,1 % à 10 %, de préférence d'environ 2 % à 3 %, du diamètre nominal.

7. Dispositif selon l'une des revendications précédentes,
**caractérisé en ce que**
une paroi latérale d'étanchéité (12) est réalisée en oblique.

8. Dispositif selon l'une des revendications précédentes,
**caractérisé en ce que**
la paroi latérale d'étanchéité (12) est réalisée en oblique du côté fluide (5).

9. Dispositif selon l'une des revendications 7 à 8,
**caractérisé en ce que**
la largeur de la gorge d'étanchéification de la paroi latérale d'étanchéité (12) réalisée en oblique diminue en direction du fond de gorge (14).

10. Dispositif selon l'une des revendications précédentes,
**caractérisé en ce que**
le fond (14) de la gorge d'étanchéification est réalisé en oblique.

11. Dispositif selon la revendication 10,
**caractérisé en ce que**
le fond (14) de la gorge d'étanchéification présente du côté fluide une profondeur inférieure à celle du côté air.

12. Dispositif selon l'une des revendications 10 à 11,
**caractérisé en ce que**
l'angle (A) entre le fond (14) de la gorge d'étanchéification et l'axe longitudinal (15) du piston hydraulique (1) est compris entre 0,1° et 6°.

13. Dispositif selon l'une des revendications 10 à 12,
**caractérisé en ce que**
l'angle (A) entre le fond (14) de la gorge d'étanchéification et l'axe longitudinal (15) du piston hydraulique (1) est d'environ 2°.
